# EUROPÄISCHE PATENTSCHRIFT

(11) **EP 1 226 341 B1**
(45) Veröffentlichungstag und Bekanntmachung des Hinweises auf die Patenterteilung: **10.12.2003**
(21) Anmeldenummer: 00969516.4
(22) Anmeldetag: 18.10.2000
(51) Int. Cl.: F01N 3/023, F02D 41/40, F01N 3/035, F01N 9/00

(54) **VERFAHREN ZUR ABGASNACHBEHANDLUNG DURCH NACHEINSPRITZUNG VON KRAFTSTOFF BEI EINER DIESEL-BRENNKRAFTMASCHINE MIT VORKATALYSATOR UND PARTIKELFILTER**
METHOD FOR THE POST-TREATMENT OF EXHAUST GASES BY SUBSEQUENT INJECTION OF FUEL IN A DIESEL-TYPE INTERNAL COMBUSTION ENGINE PROVIDED WITH A PRE-CATALYST AND A PARTICLE FILTER
PROCEDE DE TRAITEMENT SUBSEQUENT DE GAZ D'ECHAPPEMENT PAR INJECTION SUBSEQUENTE DE CARBURANT DANS UN MOTEUR A COMBUSTION INTERNE DE TYPE DIESEL AVEC POT CATALYTIQUE INITIAL ET FILTRE DE PARTICULES

(30) Priorität: 02.11.1999 DE 19952830
(43) Veröffentlichungstag der Anmeldung: 31.07.2002
(73) Patentinhaber: AUDI AG, 85045 Ingolstadt (DE)
(72) Erfinder: BLUHM, Kurt, 74172 Neckarsulm (DE); LÖRCH, Henning, 74139 Weinsberg (DE)
(86) Internationale Anmeldenummer: EP0010241
(87) Internationale Veröffentlichungsnummer: WO01033051

(56) Entgegenhaltungen:
- EP-A- 0 341 832
- EP-A- 0 621 400
- US-A- 5 207 990
- PATENT ABSTRACTS OF JAPAN vol. 1996, no. 02, 29. Februar 1996 (1996-02-29) & JP 07 279645 A (NIPPON SOKEN INC), 27. Oktober 1995 (1995-10-27)
- PATENT ABSTRACTS OF JAPAN vol. 1996, no. 06, 28. Juni 1996 (1996-06-28) & JP 08 042326 A (HINO MOTORS LTD), 13. Februar 1996 (1996-02-13)

## Beschreibung

Die vorliegende Erfindung betrifft ein Verfahren zur Abgasnachbehandlung durch Nacheinspritzung von Kraftstoff bei einer Diesel-Brennkraftmaschine mit Vorkatalysator und Partikelfilter.

Um Partikelemissionen eines Dieselmotors zukünftig wirksam zu reduzieren, ist der Einsatz eines Partikelfilters unvermeidbar. Hierbei kommt es jedoch insbesondere bei wiederholtem Kurzstreckenbetrieb aufgrund der niedrigen Abgastemperaturen zu einer fortwährenden Beladung des Filters mit Ruß, die im Extremfall zu einem Liegenbleiben des Fahrzeugs führen kann.

Aus der Druckschrift EP 0 621 400 A1 ist eine luftverdichtende Einspritzbrennkraftmaschine mit einer Abgasnachbehandlungseinrichtung bekannt. Dieser Einspritzbrennkraftmaschine ist zur Reduzierung von Stickoxiden ein Reduktionsmittel zuführbar. Das Reduktionsmittel wird in der Endphase der Verbrennung nach dem Zünd-OT durch eine Sekundäreinspritzung von Kraftstoff bereitgestellt.

Darüber hinaus ist aus der Druckschrift DE 197 35 011 A1 ein Verfahren bekannt, bei dem zur Stickoxidverminderung eine abgastemperaturabhängige und zeitabhängige Kraftstoffnacheinspritzung vorgesehen ist. Dazu wird zwischen einer ersten Nacheinspritzungsbetriebsart mit einer ersten Nacheinspritzmenge und einer zweiten Nacheinspritzungsbetriebsart mit einer gegenüber der ersten höheren zweiten Nacheinspritzmenge umgeschaltet.

Die Sekundäreinspritzung bzw. Nacheinspritzung von Kraftstoff dient dabei jeweils zur Erhöhung der Abgastemperatur durch eine exotherme Reaktion und erfolgt meist innerhalb eines bestimmten Abgastemperaturbereiches, wobei die Temperatur allein jedoch kein geeignetes Kriterium für eine zweckmäßige Nacheinspritzung von Kraftstoff darstellt.

Aus der US 5, 207,990 A ist ein Verfahren zur Abgasnachbehandlung durch Einspritzung von Kraftstoff vor einen Katalysator einer Diesel-Brennkraftmaschine mit einem Katalysator und einem Partikelfilter bekannt, bei dem die Einspritzung vor dem Katalysator in Abhängigkeit von der Temperatur im Bereich dieses Katalysators und dem Beladungszustand des Partikelfilters erfolgt. Die Einspritzung des Kraftstoffes direkt vor dem Katalysator bedeutet, dass die Kraftstoffverbindungen erst in dem Katalysator gecracked werden. Um die Verarbeitung dieses Kraftstoffes einigermaßen zu gewährleisten, ist für die Abgasnachbehandlung entsprechend ein hoher Temperaturbereich vorgesehen.

Ausgehend von diesem Stand der Technik ist es Aufgabe der vorliegenden Erfindung, ein verbessertes Verfahren zur Abgasnachbehandlung durch Nacheinspritzung von Kraftstoff bereitzustellen, welches insbesondere bei häufigem Einsatz im Kurzstreckenbetrieb von Diesel-Brennkraftmaschinen den sinnvollen Einsatz eines Partikelfilters überhaupt erst ermöglicht und damit einen weiteren Vorstoß bei der Einhaltung zukünftiger Abgasnormen und bei der Erlangung steuerlicher Förderungen darstellt.

Gelöst wird diese Aufgabe durch ein Verfahren mit den Merkmalen des Patentanspruchs 1. Indem die Nacheinspritzung NE sowohl in Abhängigkeit von der Temperatur im Bereich des motornahen Vorkatalysators T_{Kat} als auch in Abhängigkeit von dem Beladungszustand des Partikelfilters erfolgt, kann der Ansteuerbeginn sowie die Menge der Nacheinspritzung NE für jeden Lastpunkt ideal gewählt werden, so dass ein schnelles Aufheizen des Partikelfilters durch Exothermie am Vorkatalysator gewährleistet ist, ohne dass es dabei zu wesentlichen Durchbrüchen von CO oder HC kommt. Durch die bereits erfolgte Umsetzung von HC und CO am Vorkatalysator kann an einem nachgeschalteten Hauptkatalysator in hoher Ausbeute NO zu NO₂ oxidiert werden, welches in Folge für die Oxidation des Rußes im Partikelfilter benötigt wird. Dagegen wird die Nacheinspritzung NE deaktiviert, wenn die Temperatur im Bereich des Vorkatalysators T_{Kat} eine obere Regenerationstemperatur T_{RO} von ca. 280 Grad Celsius überschreitet.

Die Nacheinspritzung NE wird aktiviert, wenn die Temperatur im Bereich des Vorkatalysators T_{Kat} eine Anspringtemperatur T_{LO} von ca. 160 Grad Celsius überschreitet. Denn erst oberhalb dieser Anspringtemperatur T_{LO} - der sogenannten Lightoff-Temperatur - beträgt die Konvertierungsrate für unverbrannte Kohlenwasserstoffe mindestens 50 % und kann durch die Nacheinspritzung NE von zusätzlichem Kraftstoff eine weitere Temperaturerhöhung stattfinden, so dass die Regeneration des Partikelfilters eingeleitet wird. Die Messung der Temperatur im Bereich des Vorkatalysators T_{Kat} erfolgt dabei durch ein dem Vorkatalysator nachgeschaltetes Thermoelement.

Die Nacheinspritzung NE wird außerdem reaktiviert, wenn die Temperatur im Bereich des Vorkatalysators T_{Kat} eine untere Regenerationstemperatur T_{RU} von ca. 230 Grad Celsius unterschreitet. Damit ist ein ausreichend groß dimensionierter Regenerationstemperaturbereich ΔT_{R} von ca. 50 Grad bestimmt, innerhalb dessen eine Rußoxidation durch NO₂ im Partikelfilter sichergestellt wird.

Zusätzlich ist vorgesehen, dass die Nacheinspritzung NE bzw. die Regeneration des Partikelfilters eine bestimmte Zeitdauer t_{Limit} nicht überschreiten darf. Diese Zeitdauer t_{Limit} beträgt beispielsweise ca. 20 Sekunden und stellt eine Art "Notaus" dar, falls der Vorkatalysator einmal nicht anspringen sollte.

Zur Sicherheit ist außerdem vorgesehen, dass dann wenn der Vorkatalysator nicht anspringt eine erneute Nacheinspritzung NE erst nach Ablauf einer bestimmten Zeitverzögerung t_{Pause} erfolgen darf. Diese Zeitverzögerung t_{Pause} beträgt vorschlagsweise ca. 30 Sekunden und soll begünstigen, dass der Vorkatalysator anschließend wieder anspringen kann.

Zweckmäßig wird der Beladungszustand des Partikelfilters mittels eines Zählers Z angegeben und wird die Nacheinspritzung NE erst nach dem Erreichen eines bestimmten Zählerstandes Z_{Reg}, der einem vorgegebenen Beladungszustand entspricht, zugelassen. Dadurch kann der Beladungszustand des Partikelfilters rechnerisch auf einfache Art und Weise angezeigt bzw. verändert und als Kriterium für die Nacheinspritzung NE also für die Regeneration des Partikelfilters verwendet werden.

Der Zähler Z wird erhöht, wenn innerhalb einer bestimmten Zeitspanne t_{Start} nach dem Kaltstart der Diesel-Brennkraftmaschine die zwischen der oberen Regenerationstemperatur T_{RO} und der unteren Regenerationstemperatur T_{RU} liegende mittlere Regenerationstemperatur T_{RM} nicht erreicht wird. Denn dann findet innerhalb des Partikelfilters eine Rußansammlung statt, so dass ein erhöhter Beladungszustand vorliegt.

Zusätzlich wird der Zähler Z bei extremem Kurzstreckenbetrieb erhöht. Ein solch extremer Kurzstreckenbetrieb kann unter Umständen sogar weitere Maßnahmen, wie zum Beispiel eine elektrische Vorrichtung zur Beheizung des Vorkatalysators, eine Ansaugluftdrosselung oder eine Verstellung der Einspritzzeitpunkte in Richtung "Spät" in Verbindung mit einer erhöhten Motordrehzahl, erforderlich machen. Diese Maßnahmen werden dann bevorzugt ab dem nächsten Start der Diesel-Brennkraftmaschine eingesetzt und können den Zähler Z um einen frei wählbaren Betrag abbauen.

Darüber hinaus wird der Zähler Z schrittweise um einen bestimmten Betrag erniedrigt, wenn für eine bestimmte Summe t_{Sum} von festgelegten Zeitintervallen t_{Int} die zwischen der oberen Regenerationstemperatur T_{RO} und der unteren Regenerationstemperatur T_{RU} liegende mittlere Regenerationstemperatur T_{RM} überschritten wird. Denn beim Vorliegen dieser Summe t_{Sum} von festgelegten Zeitintervallen t_{Int} erfolgt ein Rußabbrand, so dass sich der Beladungszustand des Partikelfilters entsprechend verringert. Erfolgt die Abbaugeschwindigkeit des Zählers Z unter Berücksichtigung der Reaktionskinetik dabei temperaturabhängig, so arbeitet der Zähler Z unter Berücksichtigung dieser Temperaturabhängigkeit mit einer besonders hohen Genauigkeit.

Vorteilhaft wird darüber hinaus zur Ermittlung des Beladungszustands des Partikelfilters auch der Gegendruck in der Abgasanlage überwacht. Denn obgleich der Gegendruck allein kein geeignetes Kriterium für einen definierten Beladungszustand darstellt, weil eventuell vorhandene Löcher in der Rußschicht zu einem relativ niedrigen Gegendruck führen, der einen zu geringen Beladungszustand vortäuscht, kann durch die Überwachung des Gegendrucks dennoch eine zusätzliche Sicherheit bei der Ermittlung des Beladungszustands des Partikelfilters bereitgestellt werden.

Zur Veranschaulichung der vorstehenden Ausführungen zu dem erfindungsgemäßen Verfahren zur Abgasnachbehandlung wird auf die nachfolgende Figur verwiesen, welche in vereinfachter Weise den Verlauf der Temperatur im Bereich des Vorkatalysators T_{Kat} über der Zeit t darstellt.

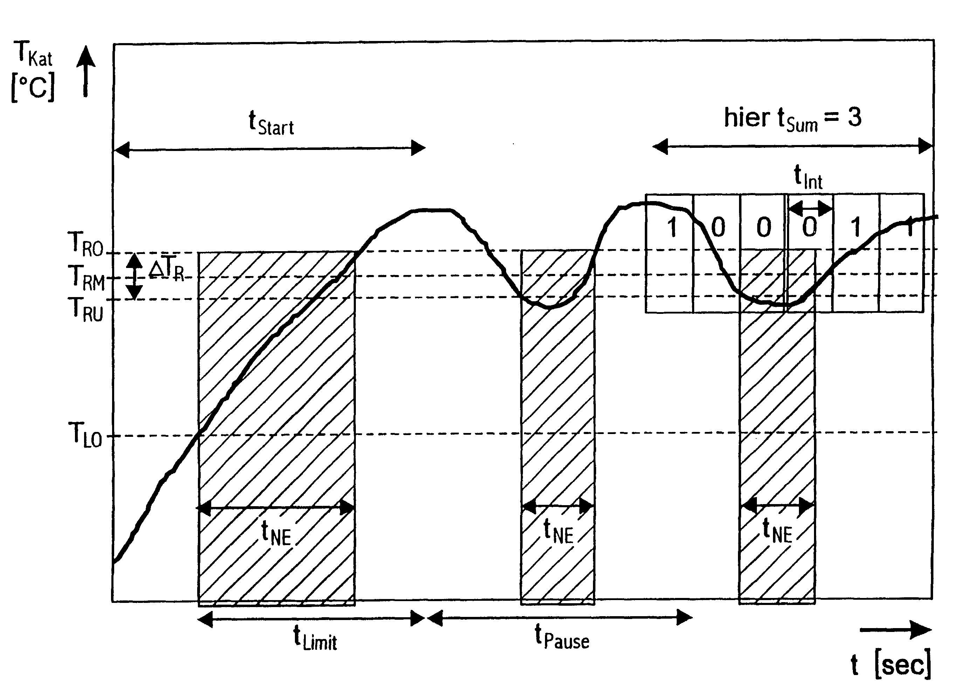

## Patentansprüche

1. Verfahren zur Abgasnachbehandlung durch Nacheinspritzung von Kraftstoff bei einer Diesel-Brennkraftmaschine mit einem Vorkatalysator und einem Partikelfilter, wobei die Nacheinspritzung NE in Abhängigkeit von der Temperatur im Bereich des Vorkatalysators T_{Kat} und dem Beladungszustand des Partikelfilters erfolgt, und
wobei die Nacheinspritzung NE deaktiviert wird, wenn die Temperatur im Bereich des Vorkatalysators T_{Kat} eine obere Regenerationstemperatur T_{RO} von ca. 280 Grad Celsius überschreitet.

2. Verfahren nach Anspruch 1, **dadurch gekennzeichnet, dass** die Nacheinspritzung NE aktiviert wird, wenn die Temperatur im Bereich des Vorkatalysators T_{Kat} eine Anspringtemperatur T_{LO} von ca. 160 Grad Celsius überschreitet.

3. Verfahren nach Anspruch 1 oder 2, **dadurch gekennzeichnet, dass** die Nacheinspritzung NE reaktiviert wird, wenn die Temperatur im Bereich des Vorkatalysators T_{Kat} eine untere Regenerationstemperatur T_{RU} von ca. 230 Grad Celsius unterschreitet.

4. Verfahren nach einem der Ansprüche 1 bis 3, **dadurch gekennzeichnet, dass** die Nacheinspritzung NE eine bestimmte Zeitdauer t_{Limit} nicht überschreiten darf.

5. Verfahren nach Anspruch 4, **dadurch gekennzeichnet, dass** eine erneute Nacheinspritzung NE erst nach Ablauf einer bestimmten Zeitverzögerung t_{Pause} erfolgen darf.

6. Verfahren nach einem der Ansprüche 1 bis 5, **dadurch gekennzeichnet, dass** der Beladungszustand des Partikelfilters mittels eines Zählers Z angegeben wird und die Nacheinspritzung NE erst ab dem Erreichen eines bestimmten Zählerstands Z_{Reg}, der einem vorgegebenen Beladungszustand entspricht, zugelassen wird.

7. Verfahren nach Anspruch 6, **dadurch gekennzeichnet, dass** der Zähler Z erhöht wird, wenn innerhalb einer bestimmten Zeitspanne t_{Start} nach dem Kaltstart der Diesel-Brennkraftmaschine die zwischen der oberen Regenerationstemperatur T_{RO} und der unteren Regenerationstemperatur T_{RU} liegende mittlere Regenerationstemperatur T_{RM} nicht erreicht wird.

8. Verfahren nach Anspruch 6 oder 7, **dadurch gekennzeichnet, dass** der Zähler Z bei extremem Kurzstreckenbetrieb zusätzlich erhöht wird.

9. Verfahren nach einem der Ansprüche 6 bis 8, **dadurch gekennzeichnet, dass** der Zähler Z schrittweise erniedrigt wird, wenn für eine bestimmte Summe t_{Sum} von festgelegten Zeitintervallen t_{Int} die zwischen der oberen Regenerationstemperatur T_{RO} und der unteren Regenerationstemperatur T_{RU} liegende mittlere Regenerationstemperatur T_{RM} überschritten wird.

10. Verfahren nach Anspruch 10, **dadurch gekennzeichnet, dass** der Zähler Z temperaturabhängig erniedrigt wird.

11. Verfahren nach einem der Ansprüche 1 bis 11, **dadurch gekennzeichnet, dass** zur Ermittlung des Beladungszustands des Partikelfilters der Gegendruck in der Abgasanlage überwacht wird.

## Claims

1. Method for exhaust gas treatment by after-injection of fuel in a diesel internal combustion engine with a precatalyser and a particle filter, whereby the after-injection NE takes place dependent upon the temperature in the region of the precatalyser Tₖₐₜ and on the loading level of the particle filter, and whereby the after-injection NE is deactivated when the temperature in the region of the precatalyser Tₖₐₜ exceeds an upper regeneration temperature T_{RO} of approximately 280°C.

2. Method according to Claim 1, **characterised in that** the after-injection NE is activated when the temperature in the region of the precatalyser Tₖₐₜ exceeds a start-up temperature T_{LO} of approximately 160° C.

3. Method according to Claim 1 or 2, **characterised in that** the after-injection NE is reactivated when the temperature in the region of the precatalyser Tₖₐₜ falls below a lower regeneration temperature T_{RU} of approximately 230°C.

4. Method according to one of the claims 1 to 3, **characterised in that** the after-injection NE must not exceed a particular duration t_{Limit}.

5. Method according to Claim 4, **characterised in that** renewed after-injection NE may only occur after the elapsing of a particular time delay t_{Pause}.

6. Method according to one of the claims 1 to 5, **characterised in that** the loading condition of the particle filter is indicated by a counter Z and the after-injection NE is only permitted after a particular counter level Z_{Reg} representing a predetermined loading level has been reached.

7. Method according to Claim 6, **characterised in that** the counter Z is incremented if within a particular time period t_{Start} after cold-starting of the diesel internal combustion engine, the middle regeneration temperature T_{RM} lying between the upper regeneration temperature T_{RO} and the lower regeneration temperature T_{RU} is not reached.

8. Method according to Claim 6 or 7, **characterised in that** the counter Z is also incremented on extremely short trip operation.

9. Method according to one of the claims 6 to 8, **characterised in that** the counter Z is reduced in step-wise manner when for a particular sum tₛᵤₘ of specified time intervals t_{Int} the middle regeneration temperature T_{RM} lying between the upper regeneration temperature T_{RO} and the lower regeneration temperature T_{RU} is exceeded.

10. Method according to Claim 10, **characterised in that** the counter Z is reduced in temperature-dependent manner.

11. Method according to one of the claims 1 to 11, **characterised in that** for determining the loading condition of the particle filter, the back-pressure in the exhaust system is monitored.

## Revendications

1. Procédé de traitement subséquent de gaz d'échappement par injection subséquente de carburant dans un moteur à combustion interne de type diesel avec un pré-catalyseur et un filtre à particules, dans lequel l'injection subséquente (NE) a lieu en fonction de la température dans la zone du pré-catalyseur T_{Cat} et en fonction de l'état de charge du filtre à particules, et
dans lequel l'injection subséquente NE est désactivée lorsque la température dans la zone du pré-catalyseur T_{Cat} dépasse une température de régénération maximale T_{Rmax} d'environ 280°C.

2. Procédé selon la revendication 1, **caractérisé en ce que** l'injection subséquente NE est activée lorsque la température dans la zone du pré-catalyseur T_{Cat} dépasse un seuil de température T_{LO} d'environ 160°C.

3. Procédé selon la revendication 1 ou 2, **caractérisé en ce que** l'injection subséquente NE est réactivée lorsque la température dans la zone du pré-catalyseur T_{Cat} dépasse une température de régénération minimale T_{Rmin} d'environ 230°C.

4. Procédé selon l'une quelconque des revendications 1 à 3, **caractérisé en ce que** l'injection subséquente NE ne peut pas dépasser une durée déterminée t_{Limit}.

5. Procédé selon la revendication 4, **caractérisé en ce qu'**une nouvelle injection subséquente NE ne peut avoir lieu qu'à la fin d'un certain délai t_{Pause}.

6. Procédé selon l'une quelconque des revendications 1 à 5, **caractérisé en ce que** l'état de charge du filtre à particules est indiqué par un compteur Z et que l'injection subséquente NE n'est autorisée qu'après qu'une valeur déterminée du compteur Z_{Reg}, qui correspond à un état de charge prédéfini, a été atteinte.

7. Procédé selon la revendication 6 **caractérisé en ce que** la valeur du compteur Z augmente, lorsque, en l'espace d'une durée déterminée t_{Start} après le démarrage à froid du moteur à combustion interne de type diesel, la température de régénération moyenne T_{Rmoy} située entre la température de régénération maximale T_{Rmax} et la température de régénération minimale T_{Rmin} n'est pas atteinte.

8. Procédé selon la revendication 6 ou 7, **caractérisé en ce que** la valeur du compteur Z augmente davantage lors d'une très courte durée de fonctionnement.

9. Procédé selon l'une quelconque des revendications 6 à 8, **caractérisé en ce que** la valeur du compteur Z baisse progressivement lorsque, pour une certaine somme t_{Som} d'intervalles temporels déterminés t_{Int}, la température de régénération moyenne T_{Rmoy} située entre la température de régénération maximale T_{Rmax} et la température de régénération minimale T_{Rmin} n'est pas dépassée.

10. Procédé selon la revendication 10, **caractérisé en ce que** la valeur du compteur Z baisse en fonction de la température.

11. Procédé selon l'une quelconque des revendications 1 à 11, **caractérisé en ce que** la contre-pression dans le dispositif d'échappement des gaz est surveillée afin de déterminer l'état de charge du filtre à particules.
